# EUROPEAN PATENT APPLICATION

(11) **EP 4 125 103 A1**
(43) Date of publication of application: **01.02.2023**
(21) Application number: 21185840.2
(22) Date of filing: 15.07.2021
(51) Int. Cl.: H01G 2/10, H01G 4/232, H01G 4/32

(54) **CAPACITOR CELL**

(71) Applicant: Valeo eAutomotive France SAS, 95800 Cergy (FR)
(72) Inventor: POUILLY, Aurélien, 95800 Cergy (FR); LOPES, Christophe, 95800 Cergy (FR); SEIF, Lothar, 95800 Cergy (FR); CANONNE, Thomas, 95800 Cergy (FR); ILG, Stefan, 91056 Erlangen (DE)
(74) Representative: Valeo Powertrain Systems

(57) **Abstract**

A capacitor cell (1a..1l) for a capacitor arrangement (10, 10a..10c) is disclosed, which comprises a film capacitor element (2) with a wound metallized plastic film (3) and which comprises two flat, rigid contact terminals (4a..4l, 5a..5l) connected to the metallized plastic film (3). The film capacitor element (2) is individually encapsulated by means of a sealing material forming an encapsulation (9). In addition, the invention relates to a capacitor arrangement (10, 10a..10c) with such capacitor cells (1a..1l), a power converter (11, 11a, 11b) with such a capacitor arrangement (10, 10a..10c) and an electric vehicle (17) with such a power converter (11, 11a, 11b).

## Description

### TECHNICAL FIELD

The invention relates to a capacitor cell, a capacitor arrangement with such capacitor cells, a power converter with such a capacitor arrangement and an electric vehicle with such a power converter which is embodied as an inverter.

### BACKGROUND ART

Electric converters, in particular inverters, for instance, for electric drives installed in electric vehicles comprise a DC link capacitor to smooth a DC voltage. Usually, the DC link capacitor comprises a capacitor housing and a plurality of individual capacitor cells connected in parallel and installed inside the housing. The capacitor housing is usually sealed by means of a potting material covering all the plurality of capacitor cells together, as it is, for instance, disclosed by WO 2019/092077A1.

### DISCLOSURE OF INVENTION

An object of the invention is to provide an improved capacitor cell, an improved capacitor arrangement, an improved power converter and an improved electric vehicle. In particular, a solution shall be proposed, which is relatively flexible, may offer a relatively high capacitance density, may allow for an improved cooling of the capacitor cell and/or provides capacitor cells that can be connected in parallel relatively easily.

The object of the invention is solved by a capacitor cell for a capacitor arrangement, for instance, a DC link capacitor arrangement, which comprises a film capacitor element with a wound metallized plastic film and which comprises two flat, rigid contact terminals connected to the metallized plastic film, wherein the film capacitor element is individually encapsulated by means of a sealing material forming an encapsulation. For example, the encapsulation or sealing material can be applied to the capacitor cell by means of overmolding, potting, spraying. Particularly, the sealing material may comprise or consist of a resin.

Moreover, the object of the invention is solved by a capacitor arrangement which comprises a plurality of individual capacitor cells of the above kind being connected in parallel. The capacitor arrangement is in particular a DC link capacitor arrangement. Since the capacitor cells are individually sealed by means of the sealing material it is possible to configure the capacitor arrangement relatively flexible by using an appropriate number of capacitor cells connected in parallel.

In addition, the object of the invention is solved by a power converter which comprises a converter-housing, a capacitor arrangement of the above kind, wherein the capacitor cells of the capacitor arrangement are attached directly to the converter-housing.

In particular, the power converter can be embodied as an inverter, which comprises a power section, for instance, a power module with a plurality of controllable switches (e.g. semiconductor switches, MOSFESTs, IGBTs) connected to the capacitor arrangement, wherein the capacitor arrangement is configured to smooth a DC voltage obtained from a DC voltage source (e.g. an external battery) and wherein the power section is configured to generate an AC voltage from the DC voltage smoothed by the capacitor arrangement. Then, the capacitor arrangement is a DC link capacitor arrangement. The AC voltage is in particular a multiphase AC voltage, such as a three phase voltage.

Finally, the object of the invention is solved by an electric vehicle, which comprises an inverter of the above kind, a DC voltage source connected to the capacitor arrangement and an electric motor connected to the power section, wherein the electric motor is mechanically coupled to wheels of the electric vehicle.

The proposed solution is relatively flexible because by means of the flat, rigid contact terminals, the individual capacitor cells can be switched in parallel easily, with or without the use of separate bus bars. In addition, the rigid contact terminals support heat dissipation from the capacitor cells. So does the encapsulation which can be made comparably thin and thus supports heat dissipation as well. Heat dissipation can be further improved if the capacitor cells of the capacitor arrangement are attached directly to the converter-housing. Generally, the capacitor cells of the capacitor arrangement can be attached directly to the converter-housing e.g. by means of glue, an adhesive, a thermal conductive adhesive, etc. Because a converter usually is cooled passively or actively and often is part of a cooling circuit with a liquid heat carrier, for instance in an electric vehicle, cooling is also improved for the capacitor arrangement. Finally, the comparably thin encapsulation does also support a high capacitance density. Accordingly, the proposed solutions are particularly suitable for applications with limited available space like this is the case in electric vehicles.

The capacitor cell may comprise an individual capacitor cell housing or case which houses the film capacitor element and is filled with the sealing material. Preferably, the individually sealed capacitor cell is caseless, i.e. does not comprise the individual capacitor cell case or housing.

Further advantageous embodiments are disclosed in the claims and in the description as well as in the figures.

Beneficially, the film capacitor element can have a cylindric shape, in more detail the shape of a general cylinder. Then, the film capacitor may have a base surface, a top surface and a lateral surface.

In particular, the capacitor element can have an oval base surface and an oval top surface and a cylindrical or lateral surface. This shape is preferred because it allows for capacitor arrangements with a high density factor, meaning that the share of the volume of the capacitor cells on the total volume of the capacitor arrangements is comparably high. However, other shapes are possible as well.

Advantageously,
a) both contact terminals can be arranged on the base surface or the top surface of the cylindric film capacitor element (not on the cylindrical surface),
b) a first contact terminal of the contact terminals can be arranged on the base surface of the cylindric film capacitor element, and a second contact terminal of the contact terminals can be arranged on the top surface of the cylindric film capacitor element,
c) a first contact terminal of the contact terminals can be arranged in parallel to a second contact terminal of the contact terminals,
d) a first contact terminal of the contact terminals can be rotated around an axis of the cylindric film capacitor element relative to a second contact terminal of the contact terminals by a rotation angle of 180°,
e) a plane of both flat contact terminals can be arranged in parallel to the base surface and the top surface of the cylindric film capacitor element,
f) a plane of both flat contact terminals can be arranged in a first orthogonal plane being oriented orthogonal to the base surface and the top surface of the cylindric film capacitor element and being oriented along a shorter extension (i.e. width) of the base surface and the top surface,
g) a plane of both flat contact terminals can be arranged in a second orthogonal plane being oriented orthogonal to the base surface and the top surface of the cylindric film capacitor element and being oriented along a longer extension (i.e. length) of the base surface and the top surface,
h) both flat contact terminals can coincide when viewed in a direction of an axis of the cylindric film capacitor element,
i) both flat contact terminals can be arranged next to each other when viewed in a direction of an axis of the cylindric film capacitor element.

In this way, a capacitor element with quite specific characteristics can be formed or designed. It should be noted in the above context, that the various embodiments or contact features can be applied to a capacitor element alone or in any usable combination. For instance, a capacitor cell can have the contact features b), c), e) and h).

Beneficially, the encapsulation can be humidity-tight. In this way, the capacitor cell can be protected against unfavorable environmental conditions.

Advantageously, the encapsulation can be elastic. In this way, the capacitor cell can be protected against cracking and delamination due to different thermal expansion coefficients of the components used.

Beneficially, the capacitor arrangement can comprise individual capacitor cells that are essentially identical. In this way, concatenating capacitor cells is eased. However, a capacitor arrangement may also comprise different capacitor cells.

Beneficially, the capacitor arrangement can also comprise "Y-capacitor cells" and/or "X-capacitor cells", which are connected to the bus bars, which also connect the individual capacitor cells of the capacitor arrangement. "Y-capacitors" are capacitors connected in a Y-configuration and form an EMC filter or are a part of the EMC filter and are connected between the capacitor arrangement and a DC power source (e.g. battery), specifically between the capacitor arrangement and the inputs of the power converter. In detail, the Y-capacitors are connected between a positive potential and ground and a negative potential and ground. "X-capacitors" are capacitors connected in a X-configuration and form an EMC filter or are a part of the EMC filter. X-capacitors are connected between the capacitor arrangement and a DC power source (e.g. battery), specifically between the capacitor arrangement and the inputs of the power converter. In detail, the X-capacitors are connected between a positive potential and ground and a negative potential and ground.

It should be noted that the various embodiments and the advantages resulting thereof which have been presented for the proposed capacitor cell, the proposed capacitor arrangement and the proposed power converter are interchangeable as the case may be. That means, that an embodiment or advantage, which has been presented for the proposed capacitor cell, may equally apply to the power converter and so on.

### BRIEF DESCRIPTION OF DRAWINGS

The invention now is described in more detail hereinafter with reference to particular embodiments, which the invention however is not limited to.
- Fig. 1: shows a first example of a capacitor cell with contact terminals arranged on the narrower side of the film capacitor element pointing upwards;
- Fig. 2: shows an example of a capacitor cell with contact terminals arranged on the narrower side of the film capacitor element pointing sidewards;
- Fig. 3: shows an example of a capacitor cell with contact terminals arranged on the longer side of the film capacitor element pointing sidewards;
- Fig. 4: shows an example of a capacitor cell with contact terminals arranged on the top and base surface of the film capacitor element pointing side-wards;
- Fig. 5: shows a capacitor cell with contact terminals arranged on the base surface of the film capacitor element pointing downwards;
- Fig. 6: shows a capacitor cell with contact terminals each having two contact tabs on opposite ends pointing upwards;
- Fig. 7: shows a capacitor cell similar to that of Fig. 6 but with contact tabs forming corners;
- Fig. 8: shows a capacitor cell with contact terminals each having two contact tabs on opposite ends pointing downwards;
- Fig. 9: shows a capacitor cell similar to that of Fig. 8 but with contact tabs forming corners;
- Fig. 10: shows a capacitor cell with contact terminals with contact tabs of different width;
- Fig. 11: shows a capacitor cell with contact terminals each having two contact tabs on opposite ends pointing inwards;
- Fig. 12: shows a capacitor cell similar to that of Fig. 11 but with contact tabs which are located at another position;
- Fig. 13: shows an example of a capacitor arrangement based on the capacitor cell shown in Fig. 9;
- Fig. 14: shows a first example of a power converter seen from above;
- Fig. 15: shows a second example of a power converter seen from below and
- Fig. 16: shows a schematic view of an electric vehicle;

### DETAILED DESCRIPTION

Generally, same parts or similar parts are denoted with the same/similar names and reference signs. The features disclosed in the description apply to parts with the same/similar names respectively reference signs. Indicating the orientation and relative position is related to the associated figure, and indication of the orientation and/or relative position has to be amended in different figures accordingly as the case may be.

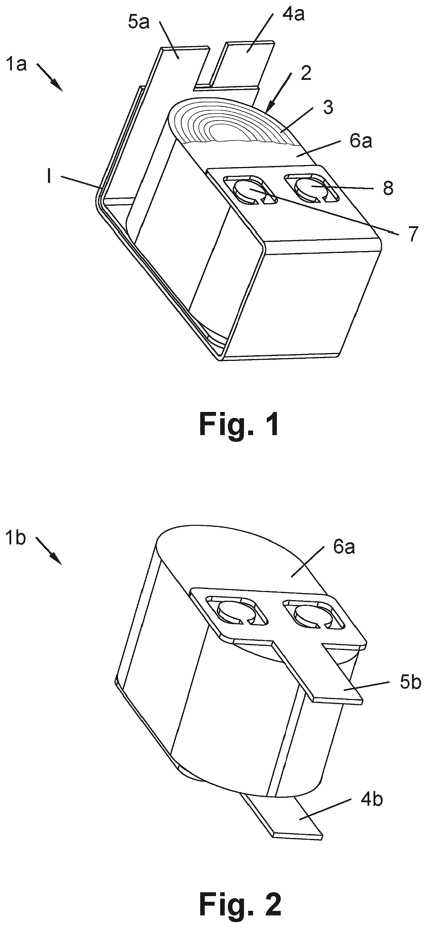

Fig. 1 shows a first example of a capacitor cell 1a, which comprises a film capacitor element 2 with a wound metallized plastic film 3 forming the capacitance of the capacitor cell 1a. Furthermore, the capacitor cell 1a comprises two flat, rigid contact terminals 4a, 5a, wherein the contact terminal 4a is connected to the metallized plastic film 3 by means of a tin shuping area 6a on the top surface of the cylindric capacitor cell 1a. The shuping area 6a basically is a metallization and enables soldering the contact pads 7, 8 of the first contact terminal 4a to the metallized plastic film 3. The connection of the second contact terminal 5a is not visible in Fig. 1 but done in the same way. It should be noted that the two contact pads 7, 8 are just exemplary and other connection methods are possible as well.

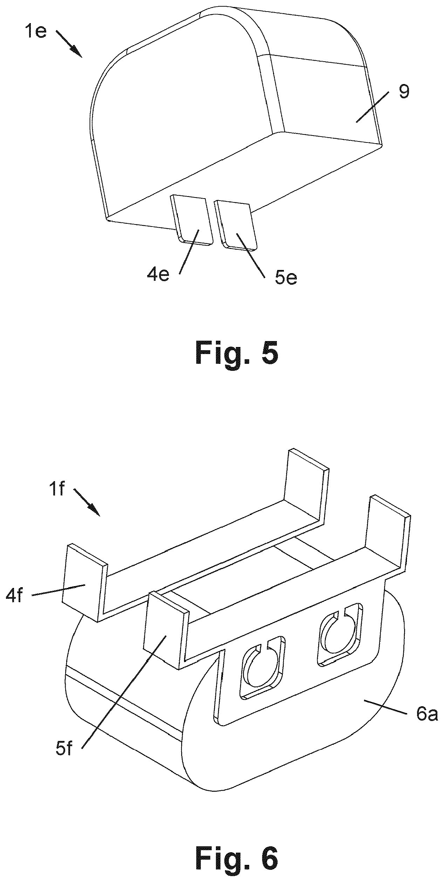

The film capacitor element 2 is encapsulated by means of a sealing material, for instance a resin, which forms an encapsulation (not explicitly visible in Fig. 1 but refer to Fig. 5). In particular the encapsulation can be humidity-tight so as to protect the metallized plastic film 3 and the tin shuping area 6a from unfavorable environmental conditions.

Moreover, there is an insulation sheet I between the first contact terminal 4a and the second contact terminal 5a to ensure electrical insulation of the same.

In this example (and also in the following examples), the film capacitor element 2 of the capacitor cell 1a has a cylindric shape, in more detail the shape of a general cylinder. Concretely, the capacitor element 2 has an oval base surface and an oval top surface. This shape is preferred, however, other shapes are possible as well.

Generally, the contact terminals 4a, 5a can be arranged in different ways. For example
a) both contact terminals 4a, 5a can be arranged on the base surface or the top surface of the cylindric film capacitor element 2,
b) a first contact terminal 4a of the contact terminals 4a, 5a can be arranged on the base surface of the cylindric film capacitor element 2, and a second contact terminal 5a of the contact terminals 4a, 5a can be arranged on the top surface of the cylindric film capacitor element 2,
c) a first contact terminal 4a of the contact terminals 4a, 5a can be arranged in parallel to a second contact terminal 5a of the contact terminals 4a, 5a,
d) a first contact terminal 4a of the contact terminals 4a, 5a can be rotated around an axis of the cylindric film capacitor element 2 relative to a second contact terminal 5a of the contact terminals 4a, 5a by a rotation angle of 180°,
e) a plane of both flat contact terminals 4a, 5a can be arranged in parallel to the base surface and the top surface of the cylindric film capacitor element 2,
f) a plane of both flat contact terminals 4a, 5a can be arranged in a first orthogonal plane being oriented orthogonal to the base surface and the top surface of the cylindric film capacitor element 2 and being oriented along a shorter extension (i.e. width) of the base surface and the top surface,
g) a plane of both flat contact terminals 4a, 5a can be arranged in a second orthogonal plane being oriented orthogonal to the base surface and the top surface of the cylindric film capacitor element 2 and being oriented along a longer extension (i.e. length) of the base surface and the top surface,
h) both flat contact terminals 4a, 5a can coincide when viewed in a direction of an axis of the cylindric film capacitor element 2,
i) both flat contact terminals 4a, 5a can be arranged next to each other when viewed in a direction of an axis of the cylindric film capacitor element 2.

Some of the above contact features can be used in combination. For example, the capacitor cell 1a of Fig. 1 comprises the contact features c) and f).

Fig. 2 shows a capacitor cell 1b, which is similar to the capacitor cell 1a shown in Fig. 1. In contrast, the contact arrangement is different. In detail, the capacitor cell 1b of Fig. 2 comprises the contact features b), c), e) and h).

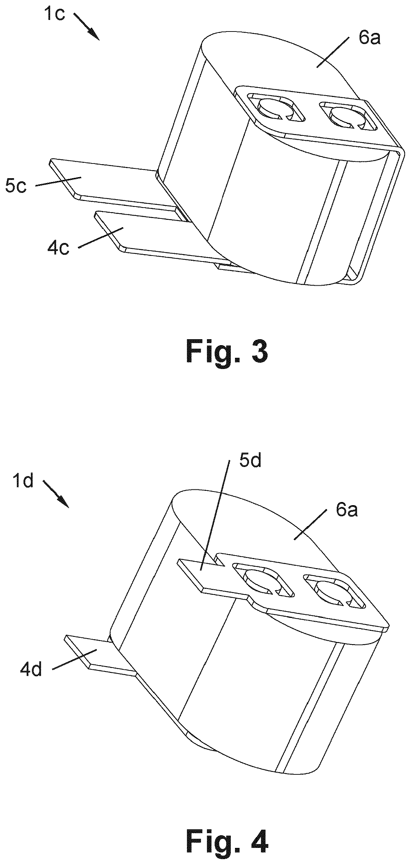

Fig. 3 shows a capacitor cell 1c, which is similar to the capacitor cell 1b shown in Fig. 2. In contrast, again the contact arrangement is different. In detail, the capacitor cell 1c of Fig. 3 comprises the contact features a), c), e) and i).

Fig. 4 shows a further capacitor cell 1d, which is similar to the capacitor cell 1b shown in Fig. 2. In contrast, again the contact arrangement is different. In detail, the capacitor cell 1d of Fig. 4 comprises the contact features a), c), e) and i).

Fig. 5 shows a capacitor cell 1e with contact tabs pointing downwards. In addition, the encapsulation 9 is explicitly depicted in Fig. 5. In detail, the capacitor cell 1e of Fig. 5 comprises the contact features a), c), f) and i). Note that the encapsulation 9 disclosed for the capacitor cell 1e can be applied to the capacitor cells 1a..1d and the following capacitor cells 1f..1l in a similar way.

Fig. 6 shows a capacitor cell 1f where each of the contact terminals 4a, 5a comprises two contact tabs on opposite ends of the contact terminals 4a, 5a which point upwards in this example. In detail, the capacitor cell 1f of Fig. 6 comprises the contact features b), c), f) and h). In another variant, the contact tabs on opposite ends of the contact terminals 4a, 5a point out straight (i.e. horizontally) and protrude over the capacitor cell 1f.

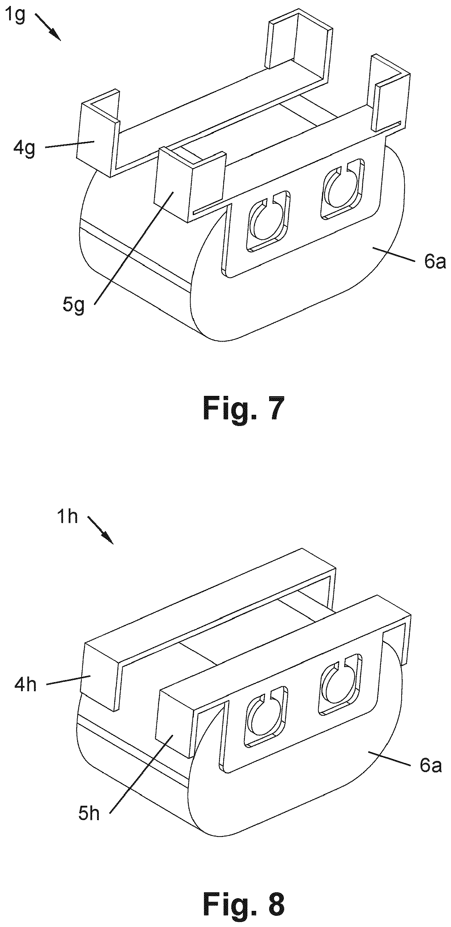

Fig. 7 shows a capacitor cell 1g, which is very similar to the capacitor cell 1f shown in Fig. 6. In contrast, the contact tabs form corners. In detail, the capacitor cell 1f of Fig. 7 comprises the contact features b), c), e), f) and h).

Fig. 8 shows another capacitor cell 1h, which is very similar to the capacitor cell 1f shown in Fig. 6. In contrast, the contact tabs point downwards in this embodiment. In detail, the capacitor cell 1h of Fig. 8 comprises the contact features b), c), f) and h).

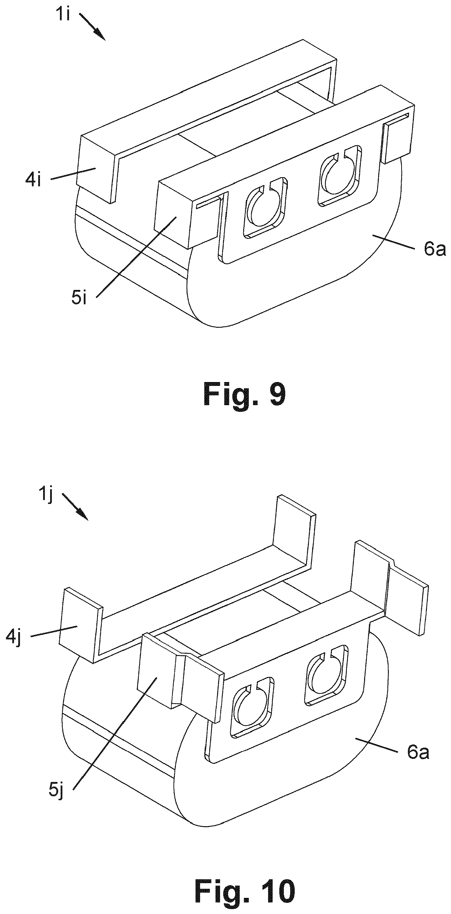

Fig. 9 shows a further capacitor cell 1i. In contrast to the capacitor cell 1h of Fig. 8, the contact tabs of the capacitor cell 1i of Fig. 9 form corners. In detail, the capacitor cell 1i of Fig. 9 comprises the contact features b), c), e), f) and h).

Fig. 10 shows another capacitor cell 1j, which is very similar to the capacitor cell 1f shown in Fig. 6. In contrast, the contact tabs of the second contact terminal 5j have a broad section and a narrow section, which fits into the first contact terminal 4j, in this embodiment. Thus, the capacitor cells 1j can be concatenated easily. In detail, the capacitor cell 1j of Fig. 10 comprises the contact features b) and f). In a variant, the contact tabs of the second contact terminal 5j are cranked to the same side (e.g. to the left or to the right). Additionally, the first contact terminal 4j is replaced by the second contact terminal 5j which is turned by 180°. Accordingly, identical shapes can be used for the first contact terminal 4j and the second contact terminal 5j. In yet another advantageous embodiment, the contact tabs of both the first contact terminal 4j and the second contact terminal 5j are shifted towards the center of the capacitor cell 1j in the direction of the cylinder axis. Accordingly, the distance between concatenated capacitor cells 1f can be reduced.

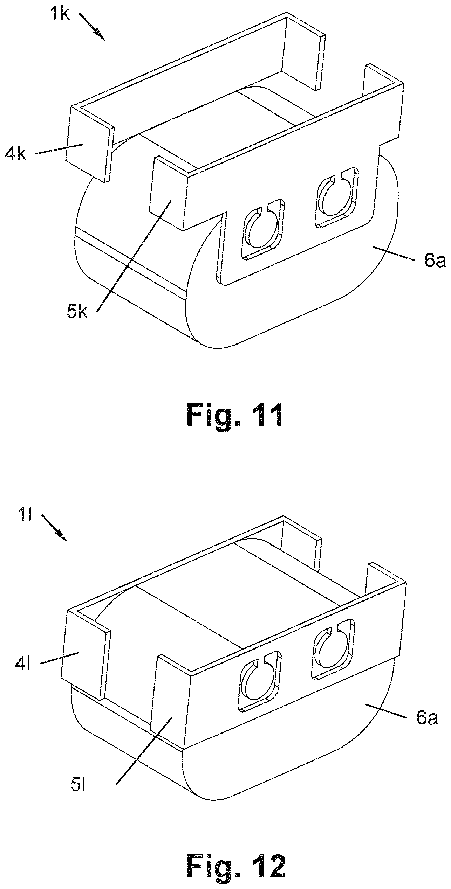

Fig. 11 shows a further capacitor cell 1k, which is very similar to the capacitor cell 1f shown in Fig. 6. In contrast, the contact tabs point inwards in this embodiment. In detail, the capacitor cell 1k of Fig. 11 comprises the contact features b), f), g) and h).

Fig. 12 finally shows a capacitor cell 11, which is very similar to the capacitor cell 1k shown in Fig. 11. In contrast, the contact tabs are slightly higher but do not protrude above the capacitor cell 2. In detail, the capacitor cell 1l of Fig. 12 again comprises the contact features b), f), g) and h).

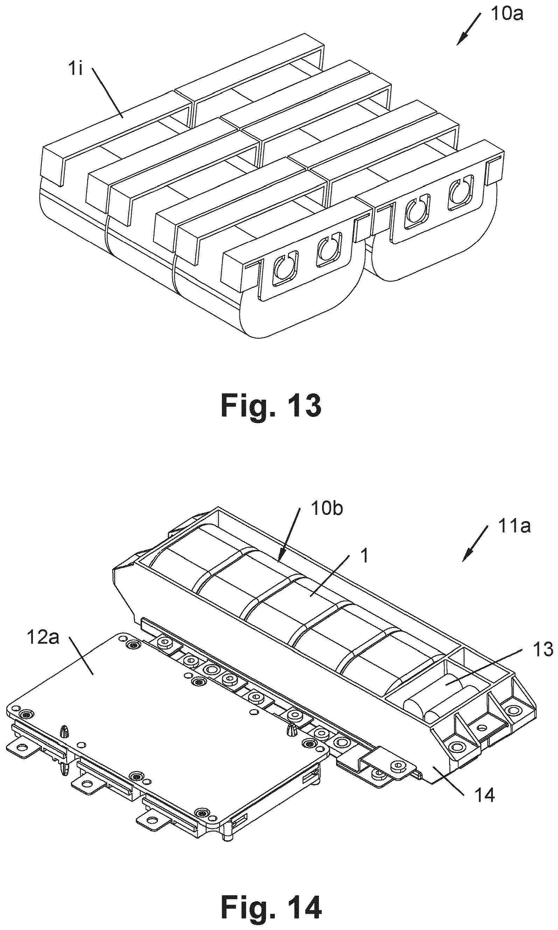

Fig. 13 now shows an exemplary embodiment of a capacitor arrangement 10a, which comprises a plurality of individual capacitor cells 1i arranged in a matrix, which can electrically be connected in parallel easily. The capacitor arrangement 10a of Fig. 13 is based on the capacitor cells 1i of Fig. 9. However, one skilled in the art will easily understand that other embodiments can form a capacitor arrangement 10a in a similar way. Generally, the electric connection of the individual capacitor cells 1i can be done with or without separate bus bars, e.g. by directly connecting the contact terminals 4i, 5i by welding or soldering or by welding or soldering the contact terminals 4i, 5i to separate bus bars (not shown in Fig. 13). In this embodiment, the individual capacitor cells 1i are identical. However, a capacitor arrangement 10a may also comprise different capacitor cells 1i.

Fig. 14 shows a first example of a power converter 11a which is, for instance, embodied as an inverter and comprises a power section 12a, for instance, a power module connected to a capacitor arrangement 10b, wherein the capacitor arrangement 10b is configured to smooth a DC voltage obtained from a DC voltage source and wherein the power section 12a is configured to generate an AC voltage from the DC voltage smoothed by the capacitor arrangement 10b. In addition, Fig. 14 shows Y-capacitor cells 13 which form an EMC filter or are a part of the EMC filter and are connected between the capacitor arrangement 10b and the inputs of the power converter 11a. Moreover, the power converter 11a comprises a case 14 for the capacitor arrangement 10b and the Y-capacitor cells 13.

The film capacitor elements 2 of the capacitor arrangement 10b are encapsulated individually. The sealing material can be a resin and in particular can be humidity-tight.

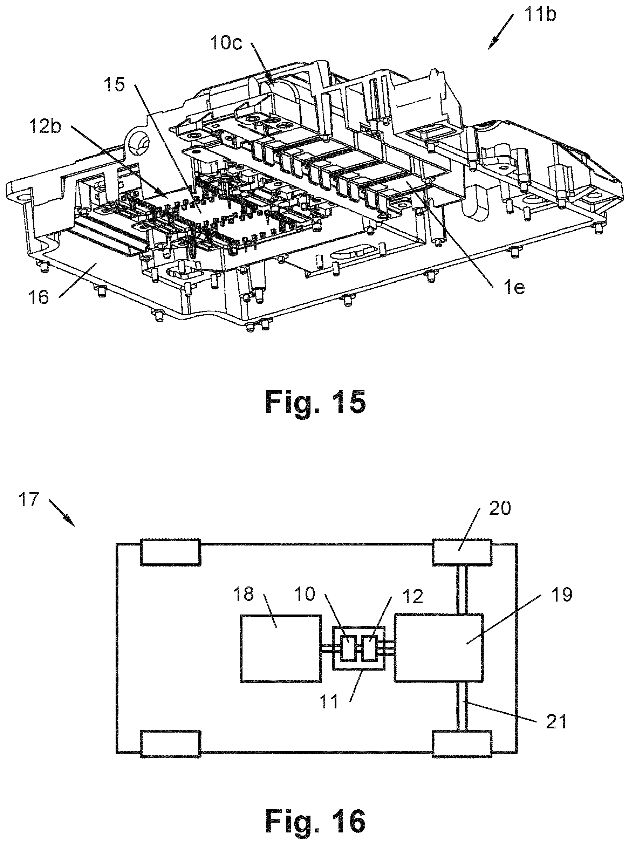

Fig. 15 shows another exemplary embodiment of a power converter 11b which is embodied as an inverter. In Fig. 15, the plurality of controllable switches 15 of the power section 12b are visible. For instance, the controllable switches 15 can be embodied as semiconductor switches, MOSFESTs, IGBTs, etc. In addition, the power converter 11b of Fig. 15 comprises a converter-housing 16, which the capacitor cells 1e of the capacitor arrangement 10c are directly attached to. For example, the capacitor cells 1e can be directly attached converter-housing 16 by means of an adhesive, thermal conductive adhesive, etc. In this way, cooling of the capacitor arrangement 10c can substantially be improved. In particular, the converter-housing 16 can be integrated into a cooling circuit.

It should be noted, that directly attached capacitor cells 1e are not necessarily linked to an inverter, but this feature can be used for power converters 11a, 11b in general.

Fig. 16 finally shows an electric vehicle 17, comprising an inverter 11 as outlined above, a DC voltage source 18 (e.g. a battery or a fuel cell) connected to the capacitor arrangement 10 (or the Y-capacitor cells 13 if there are any) of the inverter 11 and an electric motor 19 connected to the power section 12 of the inverter 11, wherein the electric motor 19 is mechanically coupled to wheels 20 of the electric vehicle 17 by means of axles 21. Generally, the capacitor arrangement 10 is configured to smooth a DC voltage obtained from the DC voltage source 18, and the power section 12 is configured to generate an AC voltage from the DC voltage smoothed by the capacitor arrangement 10 so as to power the electric motor 19. In particular, the electric vehicle 17 may also comprise a cooling circuit with a liquid heat carrier, which the inverter 11 is integrated into.

It is noted that the invention is not limited to the embodiments disclosed hereinbefore, but combinations of the different variants are possible. In reality, the capacitor cell 1a..1l, the capacitor arrangement 10, 10a..10c, the power converter 11, 11a, 11b and the electric vehicle 17 may have more or less parts than shown in the figures. Moreover, the description may comprise subject matter of further independent inventions.

It should also be noted that the term "comprising" does not exclude other elements and the use of articles "a" or "an" does not exclude a plurality. Also elements described in association with different embodiments may be combined. It should also be noted that reference signs in the claims should not be construed as limiting the scope of the claims.

## Claims

1. Capacitor cell (1a.. 11) for a capacitor arrangement (10, 10a..10c), comprising a film capacitor element (2) with a wound metallized plastic film (3) and comprising two flat, rigid contact terminals (4a..4l, 5a..5l) connected to the metallized plastic film (3), wherein the film capacitor element (2) is individually encapsulated by means of a sealing material.

2. Capacitor cell (1a..1l) as claimed in claim 1, wherein the film capacitor element (2) has a cylindric shape, in particular having a base, a top and a lateral surfaces

3. Capacitor cell (1a..1l) as claimed in claim 2, wherein the
a) both contact terminals (4a..4l, 5a..5l) are arranged on the base surface or the top surface of the cylindric film capacitor element (2),
b) a first contact terminal (4a..4l) of the contact terminals (4a..4l, 5a..5l) is arranged on the base surface of the cylindric film capacitor element (2), and a second contact terminal (3b) of the contact terminals (4a..4l, 5a..5l) is arranged on the top surface of the cylindric film capacitor element (2),
c) a first contact terminal (4a..4l) of the contact terminals (4a..4l, 5a..5l) is arranged in parallel to a second contact terminal (3b) of the contact terminals (4a..4l, 5a..5l),
d) a first contact terminal (4a..4l) of the contact terminals (4a..4l, 5a..5l) is rotated around an axis of the cylindric film capacitor element (2) relative to a second contact terminal (3b) of the contact terminals (4a..4l, 5a..5l) by a rotation angle of 180°,
e) a plane of both flat contact terminals (4a..4l, 5a..5l) is arranged in parallel to the base surface and the top surface of the cylindric film capacitor element (2),
f) a plane of both flat contact terminals (4a..4l, 5a..5l) is arranged in a first orthogonal plane being oriented orthogonal to the base surface and the top surface of the cylindric film capacitor element (2) and being oriented along a shorter extension of the base surface and the top surface,
g) a plane of both flat contact terminals (4a..4l, 5a..5l) is arranged in a second orthogonal plane being oriented orthogonal to the base surface and the top surface of the cylindric film capacitor element (2) and being oriented along a longer extension of the base surface and the top surface,
h) both flat contact terminals (4a..4l, 5a..5l) coincide when viewed in a direction of an axis of the cylindric film capacitor element (2),
i) both flat contact terminals (4a..4l, 5a..5l) are arranged next to each other when viewed in a direction of an axis of the cylindric film capacitor element (2).

4. Capacitor cell (1a..1l) as claimed in any one of claims 1 to 3, wherein the encapsulation (9) is humidity-tight.

5. Capacitor arrangement (10, 10a..10c), comprising a plurality of individual capacitor cells (1a..1l) according to any of the previous claims connected in parallel.

6. Capacitor arrangement (10, 10a..10c) as claimed in claim 5, wherein the individual capacitor cells (1a..1l) are essentially identical.

7. Power converter (11, 11a, 11b), comprising a converter-housing (16), a capacitor arrangement (10, 10a..10c) as claimed in claim 5 or claim 6, wherein the capacitor cells (1a..1l) of the capacitor arrangement (10, 10a..10c) are attached directly to the converter-housing (16).

8. Power converter (11, 11a, 11b) as claimed in claim 7 being embodied as an inverter, comprising a power section (12, 12a, 12b) with of a plurality of controllable switches (15) connected to the capacitor arrangement (10, 10a..10c), wherein the capacitor arrangement (10, 10a..10c) is configured to smooth a DC voltage obtained from a DC voltage source (18) and wherein the power section (12, 12a, 12b) is configured to generate an AC voltage from the DC voltage smoothed by the capacitor arrangement (10, 10a..10c).

9. Electric vehicle (17), comprising an inverter (11, 11a, 11b) according to claim 8, a DC voltage source (18) connected to the capacitor arrangement (10, 10a..10c) and an electric motor (19) connected to the power section (12, 12a, 12b), wherein the electric motor (19) is mechanically coupled to wheels (20) of the electric vehicle (17).
